# EUROPEAN PATENT APPLICATION

(11) **EP 4 752 949 A2**
(43) Date of publication of application: **03.06.2026**
(21) Application number: 26167977.3
(22) Date of filing: 26.03.2026
(51) Int. Cl.: H01M 4/13, H01M 4/133, H01M 10/0525, H01M 10/0567, H01M 10/0569, H01M 10/0587

(54) **SECONDARY BATTERY AND ELECTRONIC APPARATUS**

(30) Priority: 26.03.2025 CN 202510368470
(71) Applicant: Ningde Amperex Technology Limited, Ningde, Fujian 352100 (CN)
(72) Inventor: TANG, Chao, Ningde City, Fujian Province, 352100 (CN)
(74) Representative: Kraus & Lederer PartGmbB

(57) **Abstract**

A secondary battery includes an electrode assembly having a winding structure and an electrolyte. The electrode assembly includes a positive electrode, a separator, and a negative electrode, where the positive electrode and the negative electrode each include a current collector and a material layer disposed on at least one surface of the current collector. The negative electrode material layer extends beyond the positive electrode material layer in a winding direction, the extended region is a first region, a length of the first region is L mm, a length of the negative electrode material layer is L₀ mm, and 0.8% ≤ L/L₀ ≤ 18%. The electrolyte includes 1,3-propanesultone, and based on total mass of the electrolyte, a mass content of the 1,3-propanesultone is A%, where 0.01 ≤ A ≤ 8.

## Description

### TECHNICAL FIELD

This application relates to the field of electrochemical technology, and in particular, to a secondary battery and an electronic apparatus.

### BACKGROUND

Secondary batteries represented by lithium-ion batteries have outstanding characteristics such as high energy density, long cycle life, low pollution, and no memory effect. With the increasingly fast pace of life, fast-charging lithium-ion batteries have become a popular pursuit. In the prior art, fast-charging graphite, due to its advantages in improving the charging performance and cycle life of lithium-ion batteries, has become a preferred negative electrode active material for fast-charging lithium-ion batteries.

However, in lithium-ion batteries using fast-charging graphite as the negative electrode active material, during low-temperature cycling, there is a region on the negative electrode in which the negative electrode material layer does not face the positive electrode material layer. This region is prone to co-intercalation of electrolyte solvent during battery cycling charge and discharge processes. When the co-intercalation of electrolyte solvent is severe, it will cause the negative electrode material layer to peel off from the negative electrode current collector (that is, film delamination), thereby causing bumps on appearance of the lithium-ion battery.

### SUMMARY

The purpose of this application is to provide a secondary battery and an electronic apparatus, which, while maintaining the high-rate cycling performance of the secondary battery, mitigate the problem that the region of the negative electrode material layer extending beyond the positive electrode material layer is more likely to peel off from the negative electrode current collector during low-temperature fast charging. The specific technical solutions are as follows:
It should be noted that, in this application, a lithium-ion battery is used as an example of a secondary battery to describe this application, but the secondary battery of this application is not limited to a lithium-ion battery.

A first aspect of this application provides a secondary battery, including an electrode assembly having a winding structure and an electrolyte. The electrode assembly includes a positive electrode, a separator, and a negative electrode, the positive electrode includes a positive electrode current collector and a positive electrode material layer disposed on at least one surface of the positive electrode current collector, the negative electrode includes a negative electrode current collector and a negative electrode material layer disposed on at least one surface of the negative electrode current collector, the negative electrode material layer includes a negative electrode active material, the negative electrode active material includes artificial graphite, and the artificial graphite includes secondary particles. The negative electrode material layer includes a first region, the first region is a region in which the negative electrode material layer extends beyond the positive electrode material layer in a winding direction, a length of the first region is L mm, a length of the negative electrode material layer is L₀ mm, and 0.8% ≤ L/L₀ ≤ 18%; and the electrolyte includes 1,3-propanesultone, and based on total mass of the electrolyte, a mass content of the 1,3-propanesultone is A%, where 0.01 ≤ A ≤ 8.

In the foregoing technical solution, the negative electrode active material includes artificial graphite, the artificial graphite includes secondary particles, and the secondary particles are formed by bonding primary graphite particles with pitch through heat treatment at high temperature. Morphology of the secondary particles easily forms channels favorable for lithium ion transport, accelerating ion conductivity, and a carbon coating protective layer is generally formed on the surface of the secondary particles, which can effectively reduce the contact area between graphite and the electrolyte. In addition, controlling a length ratio of the first region to the negative electrode material layer within the foregoing range is beneficial to achieving high-rate performance, that is, fast charging, of the secondary battery while reducing a probability of film delamination in the first region. Due to less lithium ion intercalation in the first region during the formation process, the electrode interface protective film is usually not sufficiently formed, which easily leads to solvent intercalation between graphite layers during low-temperature fast-charging cycling, thereby causing the material layer in the first region to easily peel off from the surface of the negative electrode current collector. However, adding 1,3-propanesultone to the electrolyte and controlling its content within the foregoing range makes it easier to form a uniform and stable interface protective film on the surface of the negative electrode active material during the fast-charging formation process of the secondary battery, which can well mitigate the peeling problem of the negative electrode material layer in the first region at low temperature caused by uneven film formation leading to solvent co-intercalation. Through the synergistic effect of using graphite secondary particles, adding a specific content of 1,3-propanesultone in the electrolyte, and controlling the length ratio of the first region within a specific range, this application can improve the high-rate cycling performance of the secondary battery and effectively resolve the problem that the region of the negative electrode material layer extending beyond the positive electrode material layer is more likely to peel off from the negative electrode current collector at low temperature.

In a possible implementation, 2% ≤ L/L₀ ≤ 15%.

In the foregoing technical solution, controlling the length ratio of the first region of the negative electrode material layer within an appropriate range is beneficial to improving the fast-charging performance of the secondary battery, reducing the probability of film delamination in the first region at low temperature, and further ensuring that the energy density of the secondary battery is not compromised.

In a possible implementation, 4% ≤ L/L₀ ≤ 10%.

In a possible implementation, 0.1 ≤ A ≤ 5.

In the foregoing technical solution, the content of 1,3-propanesultone added to the electrolyte is moderate, which can form a relatively uniform and stable interface protective film. This prevents solvent co-intercalation occurring in the first region of the negative electrode material layer during low-temperature fast-charging cycling, and does not easily increase the electrode interface impedance, thereby ensuring the diffusion rate of lithium ions at low temperature and improving the low-temperature fast-charging cycling performance of the lithium-ion battery.

In a possible implementation, 80 ≤ L₀ ≤ 260.

In the foregoing technical solution, further controlling the length of the negative electrode material layer within the foregoing range can better ensure the energy density of the secondary battery, and better ensure the high-rate cycling performance of the secondary battery as well as resolving the solvent co-intercalation problem in the first region at low temperature.

In a possible implementation, a median particle size D_{V}50 of the negative electrode active material is 5 µm to 15 µm.

In the foregoing technical solution, D_{V}50 of the negative electrode active material is an average volume particle size measured by a laser particle size diffraction instrument. When D_{V}50 satisfies the foregoing conditions, it can avoid a decrease in lithium ion diffusion rate caused by excessively large negative electrode material particles and reduce side reactions of the electrolyte caused by excessively large specific surface area of excessively small particles, which is beneficial to further improving the high-rate cycling performance of the secondary battery and resolving the solvent co-intercalation problem in the first region at low temperature.

In a possible implementation, the negative electrode includes a plurality of negative electrode tabs, and the plurality of negative electrode tabs are integrally formed with the negative electrode current collector.

In a possible implementation, the positive electrode includes a plurality of positive electrode tabs, and the plurality of positive electrode tabs are integrally formed with the positive electrode current collector.

In the foregoing technical solution, the plurality of negative electrode tabs and the plurality of positive electrode tabs mean that the negative electrode and/or the positive electrode includes at least two or more tabs. Having a plurality of tabs on the negative electrode and/or the positive electrode can provide more transport channels for ions and electrons, thereby further improving the high-rate fast-charging cycling performance of the secondary battery.

In a possible implementation, the electrolyte includes diethyl carbonate, and based on the total mass of the electrolyte, a mass content of the diethyl carbonate is 10% to 50%, preferably the mass content of the diethyl carbonate is 15% to 45%.

In the foregoing technical solution, adding the foregoing content of diethyl carbonate to the electrolyte makes solvent co-intercalation less likely to occur in the first region, and the lower freezing point and viscosity of diethyl carbonate can further improve the high-rate fast-charging cycling performance of the secondary battery and mitigate the film delamination problem in the first region at low temperature.

A second aspect of this application provides an electronic apparatus, including the secondary battery according to any one of the foregoing implementations. Therefore, the electronic apparatus of this application has good performance.

Beneficial effects of the embodiments of this application:
The embodiments of this application provide a secondary battery and an electronic apparatus. The secondary battery includes an electrode assembly having a winding structure and an electrolyte. The electrode assembly includes a positive electrode, a separator, and a negative electrode, where the positive electrode and the negative electrode each include a current collector and a material layer disposed on at least one surface of the current collector; the negative electrode material layer extends beyond the positive electrode material layer in a winding direction, the extended region is a first region, a length of the first region is L mm, a length of the negative electrode material layer is L₀ mm, and 0.8% ≤ L/L₀ ≤ 18%. The electrolyte includes 1,3-propanesultone, and based on total mass of the electrolyte, a mass content of the 1,3-propanesultone is A%, where 0.01 ≤ A ≤ 8. In this application, through the synergistic effect of using graphite secondary particles, adding a specific content of 1,3-propanesultone in the electrolyte, and controlling the length ratio of the first region within a specific range, the high-rate fast-charging cycling performance of the secondary battery can be improved and the problem that the region of the negative electrode material layer extending beyond the positive electrode material layer is more likely to peel off from the negative electrode current collector can be effectively resolved.

Certainly, implementing any product or method of this application does not necessarily need to achieve all the foregoing advantages at the same time.

### DETAILED DESCRIPTION

The technical solutions in this application will be clearly and completely described below in conjunction with the embodiments of this application. Obviously, the described embodiments are only a part of the embodiments of this application, rather than all the embodiments. All other embodiments obtained by those skilled in the art based on this application fall within the protection scope of this application.

It should be noted that, in the specific embodiments of this application, a lithium-ion battery is used as an example of a secondary battery to describe this application, but the secondary battery of this application is not limited to a lithium-ion battery.

In a first aspect, this application provides a secondary battery, including an electrode assembly having a winding structure and an electrolyte. The electrode assembly includes a positive electrode, a separator, and a negative electrode, the positive electrode includes a positive electrode current collector and a positive electrode material layer disposed on at least one surface of the positive electrode current collector, the negative electrode includes a negative electrode current collector and a negative electrode material layer disposed on at least one surface of the negative electrode current collector, the negative electrode material layer includes a negative electrode active material, the negative electrode active material includes artificial graphite, and the artificial graphite includes secondary particles. The negative electrode material layer includes a first region and a second region, the first region is a region in which the negative electrode material layer extends beyond the positive electrode material layer in a winding direction, a length of the first region is L mm, a length of the negative electrode material layer is L₀ mm, and 0.8% ≤ L/L₀ ≤ 18%. A value of L/L₀ may be 0.8%, 1.2%, 1.6%, 2%, 3%, 4%, 5.5%, 6.8%, 8%, 9%, 10%, 11%, 12%, 13%, 14%, 15%, 16%, 17%, 18%, or a range formed by any two of these values, preferably 2% ≤ L/L₀ ≤ 15%, and further preferably 4% ≤ L/L₀ ≤ 10%; the electrolyte includes 1,3-propanesultone, and based on total mass of the electrolyte, a mass content of the 1,3-propanesultone is A%, where 0.01 ≤ A ≤ 8. A value of A may be 0.01, 0.05, 0.08, 0.1, 0.15, 0.2, 0.5, 0.8, 1, 1.5, 2, 3, 4, 5, 6, 7, 8, or a range formed by any two of these values, preferably 0.1 ≤ A ≤ 5.

In this application, "secondary particles" refer to those formed by bonding primary artificial graphite particles with pitch through heat treatment at a temperature higher than 550°C. Compared with primary particles, the secondary particles have a larger equivalent particle size and a more uniform particle size distribution, and a carbon coating protective layer is formed on the surface of the secondary particles, increasing the lithium ion conduction rate.

It should be noted that, in this application, "the negative electrode material layer extends beyond the positive electrode material layer in the winding direction" means that a length of the negative electrode material layer is greater than a length of the positive electrode material layer. When the positive electrode, the separator, and the negative electrode are wound to form a winding structure, a winding starting end and a winding ending end of the negative electrode material layer exceed the positive electrode material layer. In this case, a region at the winding ending end of the negative electrode material layer extending beyond the positive electrode material layer and a region at the winding starting end extending beyond the positive electrode material layer are both referred to as "first region". A sum of lengths of these two parts is the length L of the first region, and a region other than the first region is a second region.

It should also be noted that, when both upper and lower surfaces of the positive electrode current collector/negative electrode current collector are provided with negative electrode/positive electrode material layers, for the positive electrode and the negative electrode, lengths of the material layers on the upper and lower surfaces may be the same or slightly different. When the lengths of the positive electrode material layers on the upper and lower surfaces of the positive electrode current collector are different, a positive electrode material layer with a smaller length is used as a standard for comparison with the negative electrode material layer. When the lengths of the negative electrode material layers on the upper and lower surfaces of the negative electrode current collector are different, a length of a negative electrode material layer with a larger length is used as a standard for comparison with the positive electrode material layer, that is, L₀ is the length of the negative electrode material layer with the larger length.

For ease of description, as an example, in the specific embodiments of this application, both the upper and lower surfaces of the positive electrode current collector are provided with positive electrode material layers, and both the upper and lower surfaces of the negative electrode current collector are also provided with negative electrode material layers. Moreover, the lengths of the two negative electrode material layers are the same, and the lengths of the two positive electrode material layers are also the same. Other solutions are not described again. However, for those skilled in the art, other solutions are also included within the protection scope of this application. For example, in some other embodiments of this application, when material layers are provided on both upper and lower surfaces of the same current collector in the secondary battery, lengths of the material layers may alternatively be different. For example, the lengths of the two negative electrode material layers may be different, but the lengths of the two positive electrode material layers may be the same; or the lengths of the two positive electrode material layers may be different, but the lengths of the two negative electrode material layers may be the same; or the lengths of the two negative electrode material layers may be different, and the lengths of the two positive electrode material layers may also be different. In addition, only one positive electrode material layer and/or only one negative electrode material layer may alternatively be provided.

In the prior art, fast-charging graphite is usually used as the negative electrode active material to achieve the fast-charging performance of the secondary battery. However, when fast-charging graphite is used as the negative electrode active material, during low-temperature (temperature ≤ 10°C) charging of the secondary battery, film delamination of the negative electrode material layer is prone to occur in a region in which the negative electrode material layer extends beyond the positive electrode material layer, that is, the first region (non-lithium-intercalation region during formation). Because the first region has less lithium ion intercalation during the formation process of the secondary battery, the electrode interface protective film is usually not sufficiently formed, and a probability of electrolyte solvent intercalation between graphite layers during cycling is high, thereby causing the material layer in the first region to easily peel off from the surface of the negative electrode current collector, resulting in a safety risk during use of the secondary battery. In this application, the negative electrode active material includes artificial graphite, the artificial graphite includes secondary particles, the secondary particles easily form channels favorable for lithium ion transport, accelerating ion conductivity, and a carbon coating protective layer is generally formed on the surface of the secondary particles, which can effectively reduce the contact area between graphite and the electrolyte. In addition, controlling a length ratio of the first region of the negative electrode material layer to the negative electrode material layer within the foregoing range is beneficial to achieving fast-charging performance of the secondary battery while reducing the probability of film delamination in the first region. Adding 1,3-propanesultone to the electrolyte and controlling its content within the foregoing range makes it easier to form a uniform and stable interface protective film on the surface of the negative electrode active material during the formation process of the secondary battery, which can well mitigate the peeling problem of the negative electrode material layer caused by solvent co-intercalation due to uneven film formation in the first region. Through the synergistic effect of using graphite secondary particles, adding a specific content of 1,3-propanesultone in the electrolyte, and controlling the length ratio of the first region within a specific range, this application can improve the high-rate fast-charging cycling performance of the secondary battery and effectively resolve the problem that the region of the negative electrode material layer extending beyond the positive electrode material layer is more likely to peel off from the negative electrode current collector at low temperature.

In some embodiments of this application, the inventors have found that when 80 ≤ L₀ ≤ 260 and the value of L₀ may be 80, 90, 100, 110, 120, 130, 140, 150, 160, 170, 180, 190, 200, 210, 220, 230, 240, 250, 260, or a range formed by any two of these values, mitigation of the film delamination problem in the first region of the negative electrode material layer of the secondary battery at low temperature is particularly obvious. This is because controlling the length of the negative electrode material layer within the foregoing range can better synergize with a specific content of 1,3-propanesultone in the electrolyte, better resolving the solvent co-intercalation problem in the first region, and further ensuring the energy density of the secondary battery.

In addition, in some embodiments of this application, the volume-based median particle size D_{V}50 of the negative electrode active material is 5 µm to 15 µm, where a value of D_{V}50 may be 5 µm, 6 µm, 7 µm, 8 µm, 9 µm, 10 µm, 11 µm, 12 µm, 13 µm, 14 µm, 15 µm, or a range formed by any two of these values. This can avoid a decrease in diffusion rate caused by excessively large particles and reduce side reactions (for example, excessive growth of SEI film) caused by an excessively large specific surface area of excessively small particles, which is beneficial to further improving the peeling problem of the negative electrode material layer of the secondary battery and the high-rate cycling performance.

In addition, in some embodiments of this application, the negative electrode includes a plurality of negative electrode tabs, and the plurality of negative electrode tabs are integrally formed with the negative electrode current collector.

In some embodiments of this application, the positive electrode includes a plurality of positive electrode tabs, and the plurality of positive electrode tabs are integrally formed with the positive electrode current collector.

The "plurality of negative electrode tabs" and "plurality of positive electrode tabs" mean that the number of negative electrode tabs and the number of positive electrode tabs each are not less than two. Providing two or more tabs on the positive electrode and/or the negative electrode can provide more transport channels for ions and electrons, thereby further improving the high-rate cycling performance of the secondary battery. The plurality of tabs are formed by die-cutting the positive electrode current collector and/or the negative electrode current collector.

In some embodiments of this application, the negative electrode material layer usually further contains a negative electrode conductive agent. This application has no particular limitation on the type of the negative electrode conductive agent, provided that the purpose of this application can be achieved. For example, the negative electrode conductive agent includes but is not limited to at least one of acetylene black, Ketjen black, carbon nanotubes, carbon fibers, carbon dots, or graphene.

In some embodiments of this application, the negative electrode material layer may also contain a negative electrode binder and a thickener, and this application has no particular limitation on the types of the negative electrode binder and the thickener, provided that the purpose of this application can be achieved. For example, the negative electrode binder may include but is not limited to at least one of polyvinyl alcohol, polyvinyl chloride, carboxylated polyvinyl chloride, polyvinylidene fluoride, polyvinylpyrrolidone, polyurethane, polytetrafluoroethylene, polyvinylidene fluoride, styrene-butadiene rubber, or acrylated styrene-butadiene rubber; and the thickener in the negative electrode slurry may include but is not limited to at least one of sodium carboxymethyl cellulose or lithium carboxymethyl cellulose.

In some embodiments of this application, the negative electrode further includes a negative electrode current collector, and the negative electrode material layer is disposed on at least one surface of the negative electrode current collector. The foregoing "negative electrode material layer disposed on at least one surface of the negative electrode current collector" means that the negative electrode material layer may be disposed on one surface of the negative electrode current collector in its thickness direction or on two surfaces of the negative electrode current collector in its thickness direction. It should be noted that the "surface" here may be the entire area of the surface of the negative electrode current collector or a part of the area of the surface of the negative electrode current collector, and this application has no particular limitation, provided that the purpose of this application can be achieved. This application has no particular limitation on the negative electrode current collector, provided that the purpose of this application can be achieved, for example, it may include copper foil, copper alloy foil, nickel foil, stainless steel foil, titanium foil, foamed nickel, foamed copper, or a composite current collector. For example, the composite current collector may be a lithium-copper composite current collector, a carbon-copper composite current collector, a nickel-copper composite current collector, a titanium-copper composite current collector, or the like. In this application, the negative electrode material layer may further include a conductive agent and a binder. This application has no particular limitation on the type of the conductive agent in the negative electrode material layer, provided that the purpose of this application can be achieved. For example, the conductive agent may include but is not limited to at least one of conductive carbon black (Super P), carbon nanotubes (CNTs), carbon fibers, flaky graphite, graphene, metal materials, or conductive polymers; and the conductive carbon black may include but is not limited to at least one of acetylene black or Ketjen black. The carbon nanotubes may include but are not limited to single-walled carbon nanotubes and/or multi-walled carbon nanotubes. The carbon fibers may include but are not limited to vapor-grown carbon fibers (VGCF) and/or nano carbon fibers. The metal materials may include but are not limited to metal powder and/or metal fibers, specifically, the metal may include but is not limited to at least one of copper, nickel, aluminum, or silver. The conductive polymers may include but are not limited to at least one of polyphenylene derivatives, polyaniline, polythiophene, polyacetylene, or polypyrrole. This application has no particular limitation on the type of the binder in the negative electrode material layer, provided that the purpose of this application can be achieved. For example, the binder may include but is not limited to at least one of polyacrylic acid, sodium polyacrylate, potassium polyacrylate, lithium polyacrylate, polyvinyl alcohol, carboxymethyl cellulose, sodium carboxymethyl cellulose, lithium carboxymethyl cellulose, polyimide, polyamide-imide, styrene-butadiene rubber, or polyvinylidene fluoride. Optionally, the negative electrode material layer further includes a thickener, and this application has no particular limitation on the type of the thickener, provided that the purpose of this application can be achieved. For example, the thickener may include at least one of carboxymethyl cellulose or sodium carboxymethyl cellulose. This application has no particular limitation on the mass ratio of the negative electrode active material, the conductive agent, the binder, and the thickener in the negative electrode material layer, and those skilled in the art may select according to actual needs, provided that the purpose of this application can be achieved. In addition, in this application, there is no particular limitation on the thickness of the negative electrode current collector and the negative electrode material layer, provided that the purpose of this application can be achieved. For example, the thickness of the negative electrode current collector is 4 µm to 12 µm, and the thickness of the single-sided negative electrode material layer is 30 µm to 160 µm.

During preparation of the negative electrode, components in the negative electrode material layer may be dissolved or dispersed in a liquid solvent to prepare a negative electrode slurry, and then the negative electrode slurry is applied on the negative electrode current collector and dried, so as to form a negative electrode material layer on the negative electrode current collector, thus obtaining a negative electrode. During preparation of the negative electrode in such manner, there is no particular limitation on a solvent in the negative electrode slurry, provided that it can dissolve or disperse the components. Specifically, the solvent in the negative electrode slurry includes any one of aqueous solvents and organic solvents. The aqueous solvents include but are not limited to a mixed solvent of alcohol and water or water, and the like. The organic solvents include but are not limited to aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylene triamine and N,N-dimethylaminopropylamine; ethers such as diethyl ether, propylene oxide, and tetrahydrofuran (THF); amides such as N-methylpyrrolidone (NMP), dimethylformamide, and dimethylacetamide; aprotic polar solvents such as hexamethylphosphoramide and dimethyl sulfoxide, and the like. In addition, in some other embodiments, when an aqueous solvent is used, the components of the negative electrode slurry further include a thickener and a styrene-butadiene rubber (SBR) emulsion to enable slurry formation of the negative electrode slurry, so as to adjust the viscosity of the negative electrode slurry. The types of the thickener in the negative electrode slurry include but are not limited to at least one of carboxymethyl cellulose, methyl cellulose, hydroxymethyl cellulose, ethyl cellulose, polyvinyl alcohol, oxidized starch, phosphorylated starch, casein, and salts thereof. In addition, during preparation of the negative electrode, the components in the negative electrode material layer may alternatively be dry-mixed to form a sheet, and then the obtained sheet is laminated onto the negative electrode current collector.

### Electrolyte

In some embodiments of this application, in addition to the foregoing 1,3-propanesultone, the electrolyte may further include a lithium salt and a non-aqueous solvent. This application has no particular limitation on the lithium salt, provided that the purpose of this application can be achieved. For example, the lithium salt may include but is not limited to at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalate)borate (LiBOB), or lithium difluoro(oxalate)borate. This application has no particular limitation on the content of the lithium salt in the electrolyte, provided that the purpose of this application can be achieved. For example, based on mass of the electrolyte, a mass percentage of the lithium salt is 8% to 15%. This application has no particular limitation on the non-aqueous solvent, provided that the purpose of this application can be achieved, for example, the non-aqueous solvent may include but is not limited to at least one of carbonate compounds, carboxylate compounds, ether compounds, or other organic solvents. The carbonate compounds may include but are not limited to at least one of chain carbonate compounds, cyclic carbonate compounds, or fluorinated carbonate compounds. The chain carbonate compounds may include but are not limited to at least one of dimethyl carbonate (DMC), dipropyl carbonate (DPC), methyl propyl carbonate (MPC), ethyl propyl carbonate (EPC), or methyl ethyl carbonate (MEC). The cyclic carbonates may include but are not limited to at least one of ethylene carbonate (EC), butylene carbonate (BC), or vinylethylene carbonate (VEC). The fluorinated carbonate compounds may include but are not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compounds may include but are not limited to at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The ether compounds may include but are not limited to at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvents may include but are not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. This application has no particular limitation on the content of the non-aqueous solvent in the electrolyte, provided that the purpose of this application can be achieved.

As an example, in some embodiments of this application, the electrolyte includes diethyl carbonate, and based on the total mass of the electrolyte, a mass content of the diethyl carbonate is 10% to 50%, preferably 15% to 45%. When the artificial graphite as the negative electrode active material is secondary particles, adding the foregoing content of diethyl carbonate to the electrolyte makes solvent co-intercalation less likely to occur at the negative electrode interface in the first region, and the lower freezing point and viscosity of diethyl carbonate can further improve the high-rate fast-charging cycling performance of the secondary battery and the low-temperature film delamination problem. In addition to the electrolyte and the negative electrode, the positive electrode in the secondary battery of this application is specifically as follows:

### Positive electrode

In some embodiments of this application, the positive electrode includes a positive electrode current collector and a positive electrode material layer disposed on at least one surface of the positive electrode current collector. The "positive electrode material layer disposed on at least one surface of the positive electrode current collector" means that the positive electrode material layer may be disposed on one surface of the positive electrode current collector in its thickness direction or on two surfaces of the positive electrode current collector in its thickness direction. It should be noted that the "surface" here may be the entire area of the surface of the positive electrode current collector or a part of the area of the surface of the positive electrode current collector, and this application has no particular limitation, provided that the purpose of this application can be achieved.

The components of the positive electrode material layer include a positive electrode active material, and the positive electrode active material may be any substance capable of reversibly intercalating and deintercalating alkali metal ions such as Li⁺ and Na⁺ to ensure normal charging and discharging of the secondary battery. For example, the positive electrode active material includes but is not limited to at least one of lithium iron phosphate (LiFePO₄), lithium cobalt oxide (LiCoO₂), lithium manganese oxide, lithium nickel oxide, and ternary materials; the ternary materials include but are not limited to at least one of LiNiₓCo_{y}Mn_{z}O₂, LiNiₓCo_{y}Al_{z}O₂, and the like; and the contents of Ni, Co, Mn, Al, and the like may be adjusted, provided that x+y+z = 1. For example, the ternary material may be LiNi_{0.6}Co_{0.2}Mn_{0.2}O₂, LiNi_{0.88}Co_{0.08}Mn_{0.04}O₂, LiNi_{0.8}Co_{0.15}Mn_{0.05}O₂, LiNi_{0.8}Co_{0.1}Mn_{0.1}O₂, LiNi_{0.88}Co_{0.1}Mn_{0.02}O₂, LiNi_{0.8}Co_{0.15}Al_{0.05}O₂, LiNi_{0.88}Co_{0.1}Al_{0.02}O₂, and the like.

In some embodiments, the components of the positive electrode material layer further include a positive electrode conductive agent; this application has no limitation on the type of the positive electrode conductive agent, and any known conductive material may be used. Specifically, the positive electrode conductive agent includes but is not limited to at least one of carbon black such as acetylene black and Super-P, amorphous carbon such as needle coke, carbon nanotubes, or graphene.

In some embodiments, the components of the positive electrode material layer generally further contain a positive electrode binder, and there is no particular limitation on the type of the positive electrode binder used during the manufacture of the positive electrode material layer, and in a case of using a coating method, any material that is soluble or dispersible in the liquid medium used in electrode fabrication can be used. The positive electrode binder includes but is not limited to any one or at least two of the following: resin polymers such as polyethylene, polypropylene, polyethylene terephthalate, polymethyl methacrylate, polyimide, aromatic polyamide, cellulose, and nitrocellulose; rubber polymers such as styrene-butadiene rubber (SBR), nitrile rubber (NBR), fluororubber, isoprene rubber, polybutadiene rubber, and ethylene-propylene rubber; thermoplastic elastomer polymers such as styrene-butadiene-styrene block copolymers or hydrogenated products thereof, ethylene-propylene-diene terpolymers (EPDM), styrene-ethylene-butadiene-ethylene copolymers, and styrene-isoprene-styrene block copolymers or hydrogenated products thereof; soft resin polymers such as syndiotactic-1,2-polybutadiene, polyvinyl acetate, ethylene-vinyl acetate copolymers, and propylene-α-olefin copolymers; fluoropolymers such as polyvinylidene fluoride (PVDF), polytetrafluoroethylene, fluorinated polyvinylidene fluoride, and polytetrafluoroethylene-ethylene copolymers; and polymer compositions having ionic conductivity of alkali metal ions (particularly lithium ions).

In the positive electrode, there is no particular limitation on the type of the positive electrode current collector, and it may be any material known to be suitable for use as a positive electrode current collector. The material of the positive electrode current collector includes but is not limited to metal materials such as aluminum, stainless steel, nickel plating, titanium, and tantalum. In addition, in order to reduce the electronic contact resistance between the positive electrode current collector and the positive electrode material layer, a conductive aid or a conductive coating may be provided on the surface of the positive electrode current collector. The conductive aid includes but is not limited to carbon, noble metals such as gold, platinum, and silver. The conductive coating may be a mixed layer of an inorganic oxide, a conductive agent, and a positive electrode binder.

This application has no particular limitation on the thickness of the positive electrode current collector and the positive electrode material layer, provided that the purpose of this application can be achieved.

In addition, similar to the preparation of the negative electrode, during preparation of the positive electrode, a positive electrode slurry may be configured, and then the positive electrode slurry is applied on the positive electrode current collector and dried, so as to form a positive electrode material layer on the positive electrode current collector to obtain a positive electrode; alternatively, the components in the positive electrode material layer may be dry-mixed to form a sheet, and then the obtained sheet is laminated onto the positive electrode current collector to form a positive electrode material layer, thereby obtaining a positive electrode. Specifically, the solvent in the positive electrode slurry includes but is not limited to N-methylpyrrolidone (NMP), ethylene carbonate (EC), and the like.

In addition, in addition to the positive electrode, the negative electrode, and the electrolyte, the secondary battery further includes a separator, and the structure and function of the separator are specifically as follows:
In order to prevent short circuits, a separator is usually disposed between the positive electrode and the negative electrode. In this case, the electrolyte of this application is usually used by infiltrating the separator.

There is no particular limitation on the material and shape of the separator, provided that the effect of this application is not significantly impaired. The material of the separator may be resin, glass fiber, inorganic substance, and the like that is formed of a material stable to the electrolyte of this application. In some embodiments, the separator includes a porous sheet or non-woven fabric having excellent liquid retention properties. Examples of the material of the resin or glass fiber separator include but are not limited to polyolefins, aromatic polyamides, polyimides (PI), polyamides (PA), polytetrafluoroethylene, polyethersulfone, spandex, or aramid. In some embodiments, the polyolefin is polyethylene or polypropylene. In some embodiments, the polyolefin is polypropylene. The foregoing materials of the separator may be used alone or in any combination.

The separator may also be a material formed by laminating the foregoing materials, and examples thereof include but are not limited to a three-layer separator laminated in the order of polypropylene, polyethylene, and polypropylene.

The material of the inorganic substance includes but is not limited to oxides such as alumina and silica, and nitrides such as aluminum nitride and silicon nitride, and sulfates (for example, barium sulfate, calcium sulfate, and the like). The form of the inorganic substance includes but is not limited to granular or fibrous.

The form of the separator may be a thin film form, including but not limited to non-woven fabric, woven fabric, microporous film, and the like. In the thin film form, the pore diameter of the separator is 0.01 µm to 1 µm, and the thickness is 5 µm to 50 µm. In addition to the foregoing independent thin film-like separator, the following separator may also be used: a separator formed by forming a composite porous layer containing the foregoing inorganic particles on the surface of the positive electrode and/or the negative electrode using a resin binder, for example, a separator that is formed by forming a porous layer on both sides of the positive electrode using alumina particles with a D90 particle size of less than 1 µm with a fluororesin as a binder.

The thickness of the separator is arbitrary. In some embodiments, the thickness of the separator is greater than 1 µm, greater than 5 µm, or greater than 8 µm. In some embodiments, the thickness of the separator is less than 50 µm, less than 40 µm, or less than 30 µm. When the thickness of the separator is within the foregoing range, insulating property and mechanical strength can be ensured, and the rate characteristics and energy density of the secondary battery can be ensured.

In this application, the separator may include a substrate and a surface treatment layer. The substrate may be a non-woven fabric or a composite film having a porous structure, and the material of the substrate may include at least one of polyethylene, polypropylene, polyethylene terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used. Optionally, a surface treatment layer is provided on at least one surface of the substrate, and the surface treatment layer may be a polymer layer or an inorganic substance layer, or a layer formed by mixing a polymer and an inorganic substance. For example, the inorganic substance layer includes inorganic particles and a binder, and this application has no particular limitation on the foregoing inorganic particles, for example, it may include at least one of alumina, silica, magnesia, titania, hafnia, tin oxide, ceria, nickel oxide, zinc oxide, calcium oxide, zirconia, yttria, silicon carbide, boehmite, aluminum hydroxide, magnesium hydroxide, calcium hydroxide, or barium sulfate. This application has no particular limitation on the foregoing binder, for example, it may be at least one of the foregoing binders. The polymer layer contains a polymer, and the material of the polymer includes at least one of polyamide, polyacrylonitrile, acrylate polymer, polyacrylic acid, polyvinylpyrrolidone, polyvinyl ether, polyvinylidene fluoride, or poly(vinylidene fluoride-hexafluoropropylene).

The secondary battery of this application further includes a packaging pouch for accommodating the positive electrode, the separator, the negative electrode, and the electrolyte, as well as other components known in the field in the secondary battery, and this application does not limit the foregoing other components. This application has no particular limitation on the packaging pouch, and it may be any packaging pouch known in the art, provided that the purpose of this application can be achieved.

In addition, this application further provides an electronic apparatus, including the secondary battery according to this application.

The use of the secondary battery of this application is not particularly limited, and it may be used for any electronic apparatus known in the prior art. In some embodiments, the secondary battery of this application may be used for, but not limited to, notebook computers, pen-input computers, mobile computers, e-book players, portable telephones, portable fax machines, portable copiers, portable printers, head-mounted stereo headphones, video recorders, LCD televisions, portable cleaners, portable CD players, mini discs, transceivers, electronic notebooks, calculators, memory cards, portable recorders, radios, backup power supplies, motors, automobiles, motorcycles, power-assisted bicycles, bicycles, lighting fixtures, toys, game machines, clocks, electric tools, flashlights, cameras, large household batteries, lithium-ion capacitors, and the like.

### Examples

Hereinafter, taking lithium-ion batteries as an example, examples and comparative examples are given to more specifically describe the implementations of the secondary battery of this application. Various tests and evaluations are performed according to the following methods. In addition, unless otherwise specified, "part" and "%" are on a mass basis. Those skilled in the art will understand that the preparation methods described in this application are only examples, and any other suitable preparation methods are within the scope of this application.

### Test method and device:

### Rate cycling performance test

The secondary battery is placed in a 25°C constant temperature chamber and left standing for 30 minutes to make the secondary battery reach a constant temperature. The lithium-ion battery that has reached the constant temperature is charged at a constant current of 1C to a voltage of 4.3 V, and then charged at a constant voltage of 4.3 V until the current is less than or equal to 0.05C. Subsequently, the battery is discharged at a constant current of 1C and 5C respectively to 2.5 V, to obtain a 1C discharge capacity and a 5C discharge capacity of the lithium-ion battery, respectively. The 5C discharge capacity is divided by the 1C discharge capacity to obtain a 5C capacity retention rate. A larger 5C capacity retention rate indicates better rate performance.

### Negative electrode material layer delamination degree test

The test temperature is maintained at -10°C, and the lithium-ion batteries in the examples and comparative examples are charged at a constant current of 0.1C to 4.25 V, then charged at a constant voltage of 4.25 V until the current is less than or equal to 0.05C, left standing for 30 min, discharged at a constant current of 0.5C to 2.4 V, and left standing for 30 min. The foregoing steps are recorded as 1 cycle, and each group of lithium-ion batteries is cycled 10 times. After cycling is completed, each group of lithium-ion batteries is disassembled, the negative electrode is taken out, and the state of the first region of each group of negative electrodes is observed and recorded.

The criteria for determining the delamination degree of the lithium-ion battery are as follows: a delamination area of 0% means no delamination, that is, the delamination degree is none; a delamination area greater than 0 and less than or equal to 2% means slight delamination, that is, the delamination degree is slight; a delamination area greater than 2% and less than or equal to 20% means moderate delamination, that is, the delamination degree is moderate; a delamination area greater than 20% and less than or equal to 100% means severe delamination, that is, the delamination degree is severe, where a percentage of the delamination area is calculated based on the total area of the first region of the negative electrode.

In this application, those skilled in the art may understand that "C" refers to a rated capacity of a finished lithium-ion battery when it leaves the factory. "1C" is a current value for fully discharging the lithium-ion battery capacity in 1 hour, "0.1C" is a current value for fully discharging the lithium-ion battery capacity in 10 hours, and other rates are analogous.

### Example 1-1

### <Preparation of electrolyte>

In an argon atmosphere glove box with a water content of less than 10 ppm, ethylene carbonate, propylene carbonate, and methyl ethyl carbonate were mixed in a volume ratio of 1:1:1 to form a mixed solution, and then lithium salt lithium hexafluorophosphate (LiPF₆) and 1,3-propanesultone were added to form an electrolyte; and based on the total mass of the electrolyte, a mass content of LiPF₆ was 12.5%, a mass content A% of 1,3-propanesultone was as shown in Table 1, and the rest was the mixed solution.

### <Preparation of positive electrode>

The positive electrode active material LiMn_{0.6}Fe_{0.4}PO₄, the conductive agent acetylene black, and the binder polyvinylidene fluoride (PVDF) were mixed in a mass ratio of 96:2:2, N-methylpyrrolidone (NMP) was added as a solvent, and stirred under the action of a vacuum stirrer until the system becomes uniform, with a solid content of 75 wt% to obtain a positive electrode slurry. The positive electrode slurry was uniformly applied on an aluminum foil of a positive electrode current collector with a thickness of 12 µm, and dried at 85°C, and the foregoing steps were repeated on the other surface of the positive electrode current collector, followed by cold-pressing, to obtain a double-sided coated positive electrode with a thickness of 100 µm. Then, after cutting and slitting, it was dried at 105°C under vacuum for 4 h to obtain a positive electrode with a dimension of 74 mm × 867 mm for use.

### <Preparation of negative electrode>

The negative electrode active material artificial graphite (median particle size particle size D_{V}50 of 4 µm, morphology of secondary particles), the conductive agent Super P, and the negative electrode binder sodium carboxymethyl cellulose were mixed in a mass ratio of 92:2:6, deionized water was added and stirred uniformly to obtain a negative electrode slurry with a solid content of 70 wt%; the negative electrode slurry was uniformly applied on one surface of a copper foil of a negative electrode current collector with a thickness of 8 µm, then dried at 110°C, and the foregoing steps were repeated on the other surface of the negative electrode current collector, and cold-pressed to obtain a double-sided coated negative electrode with a single-sided negative electrode material layer thickness of 150 µm and a compaction density of the single-sided negative electrode material layer of 1.6 g/cm³, and then after cutting and slitting, it was dried at 105°C under vacuum for 4 h to obtain a negative electrode with a dimension of 75 mm × 865 mm for use. In the negative electrode, the length of the negative electrode material layer was recorded as L₀ mm, and the specific value of L₀ was as shown in Table 1.

### <Separator>

A polyethylene (PE) porous polymer film was used as the separator.

### <Preparation of secondary battery>

The prepared positive electrode and negative electrode were laser-cleaned at specific positions to form tab grooves, tabs were welded, and then the positive electrode, the separator, the negative electrode, and the separator were stacked in order, so that the separator was positioned between the positive electrode and the negative electrode to play a role of isolation, and then wound to obtain an electrode assembly with a winding structure. After welding a current collecting disc, the electrode assembly was placed in an aluminum plastic film packaging pouch, dried in a vacuum oven at 85°C for 12 h to remove moisture, the prepared electrolyte was injected, and after vacuum packaging, standing, formation, shaping, and capacity testing processes, a secondary battery was obtained.

In the winding structure of the lithium-ion battery, a region in which the negative electrode material layer in the negative electrode extends beyond the positive electrode material layer was the first region, a length of the first region was recorded as L mm, and a proportional relationship between L and L₀ was as shown in Table 1.

### Examples 1-2 to 1-7

Except that the length L of the first region in the winding structure was adjusted according to Table 1, the rest was the same as example 1-1.

### Examples 1-8 to 1-10

Except that the length L of the first region in the winding structure and the length L₀ of the negative electrode material layer were adjusted according to Table 1, the rest was the same as example 1-5. When L₀ was adjusted, the corresponding positive electrode length and positive electrode material layer length were adjusted together based on the value of L and the understanding of those skilled in the art; and when L₀ remained unchanged, the value of L was mainly adjusted by adjusting the length of the positive electrode material layer.

### Examples 1-11 to 1-15

Except that the content of 1,3-propanesultone in the electrolyte was adjusted according to Table 1, the rest was the same as example 1-5.

### Comparative examples 1 to 2

Except that the length L of the first region in the winding structure was adjusted according to Table 1, the rest was the same as example 1-1.

### Comparative example 3

Except that artificial graphite of primary particles with the same mass was used instead of artificial graphite of secondary particles, the rest was the same as example 1-5.

### Comparative examples 4 to 5

Except that the content of 1,3-propanesultone in the electrolyte was adjusted according to Table 1, the rest was the same as example 1-5.

**Table 1**

| Group | Electrolyte | Negative electrode material layer | | | | Low-temperature delamination degree | 5C rate cycling capacity retention rate/% |
|---|---|---|---|---|---|---|---|
| | 1,3-propanesultone content A% | Artificial graphite particle morphology of negative electrode active material | First region length L/mm | Negative electrode material layer length L₀/mm | L/L₀ | | |
| Example 1-1 | 1 | Secondary particles | 0.56 | 70 | 0.8% | No delamination | 83.50 |
| Example 1-2 | 1 | Secondary particles | 1.4 | 70 | 2% | No delamination | 85.90 |
| Example 1-3 | 1 | Secondary particles | 2.8 | 70 | 4% | No delamination | 87.30 |
| Example 1-4 | 1 | Secondary particles | 5.6 | 70 | 8% | No delamination | 89.50 |
| Example 1-5 | 1 | Secondary particles | 7 | 70 | 10% | No delamination | 88.60 |
| Example 1-6 | 1 | Secondary particles | 10.5 | 70 | 15% | Slight delamination | 87.10 |
| Example 1-7 | 1 | Secondary particles | 12.6 | 70 | 18% | Slight delamination | 86.70 |
| Example 1-8 | 1 | Secondary particles | 8 | 80 | 10% | No delamination | 88.90 |
| Example 1-9 | 1 | Secondary particles | 26 | 260 | 10% | Slight delamination | 87.87 |
| Example 1-10 | 1 | Secondary particles | 26.5 | 265 | 10% | Slight delamination | 86.30 |
| Example 1-11 | 0.01 | Secondary particles | 7 | 70 | 10% | Slight delamination | 85.20 |
| Example 1-12 | 0.1 | Secondary particles | 7 | 70 | 10% | No delamination | 88.00 |
| Example 1-13 | 2 | Secondary particles | 7 | 70 | 10% | No delamination | 90.70 |
| Example 1-14 | 5 | Secondary particles | 7 | 70 | 10% | No delamination | 89.80 |
| Example 1-15 | 8 | Secondary particles | 7 | 70 | 10% | No delamination | 86.30 |
| Comparative example 1 | 1 | Secondary particles | 0.35 | 70 | 0.5% | No delamination | 78.10 |
| Comparative example 2 | 1 | Secondary particles | 14 | 70 | 20% | Severe delamination | 77.30 |
| Comparative example 3 | 1 | Primary particles | 7 | 70 | 10% | Slight delamination | 70.30 |
| Comparative example 4 | 8.5 | Secondary particles | 7 | 70 | 10% | No delamination | 79.40 |
| Comparative example 5 | 0.008 | Secondary particles | 7 | 70 | 10% | Moderate delamination | 78.86 |

### Examples 2-1 to 2-5

Except that the D_{V}50 particle size of the negative electrode active material was adjusted according to Table 2, the rest was the same as example 1-5.

**Table 2**

| Group | Electrolyte | Negative electrode material layer | | | | | Low-temperature delamination degree | 5C rate cycling capacity retention rate% |
|---|---|---|---|---|---|---|---|---|
| | 1,3-propanesultone content A% | Artificial graphite particle morphology of negative electrode active material | Negative electrode active material D_{V}50/µm | First region length L/mm | Negative electrode material layer length L₀/mm | L/L₀ | | |
| Example 1-5 | 1 | Secondary particles | 4 | 7 | 70 | 10.00% | No delamination | 88.60 |
| Example 2-1 | 1 | Secondary particles | 5 | 7 | 70 | 10.00% | No delamination | 90.80 |
| Example 2-2 | 1 | Secondary particles | 8 | 7 | 70 | 10.00% | No delamination | 91.10 |
| Example 2-3 | 1 | Secondary particles | 10 | 7 | 70 | 10.00% | No delamination | 92.60 |
| Example 2-4 | 1 | Secondary particles | 15 | 7 | 70 | 10.00% | No delamination | 91.50 |
| Example 2-5 | 1 | Secondary particles | 18 | 7 | 70 | 10.00% | No delamination | 89.30 |

### Example 3-1

Except that the electrolyte was prepared in the following manner, the rest was the same as example 1-5.

### <Preparation of Electrolyte>

In an argon atmosphere glove box with a water content of less than 10 ppm, ethylene carbonate, propylene carbonate, and methyl ethyl carbonate were mixed in a volume ratio of 1:1:1 to form a mixed solution, and then lithium salt lithium hexafluorophosphate (LiPF₆), 1,3-propanesultone, and diethyl carbonate were added to form an electrolyte; and based on the total mass of the electrolyte, a mass content of LiPF₆ was 12.5%, a mass content A% of 1,3-propanesultone and a mass content of diethyl carbonate were as shown in Table 3, and the rest was the mixed solution.

### Examples 3-2 to 3-6

Except that the content of diethyl carbonate in the electrolyte was adjusted according to Table 3, the rest was the same as example 1-5.

### Examples 3-7 to 3-8

Except that the content of diethyl carbonate in the electrolyte was adjusted according to Table 3, the rest was the same as example 2-2.

**Table 3**

| Group | Electrolyte | | Negative electrode material layer | | | | | Low-temperature delamination degree | 5C rate cycling capacity retention rate/% |
|---|---|---|---|---|---|---|---|---|---|
| | 1,3-propanesultone content A% | Diethyl carbonate content/% | Artificial graphite particle morphology of negative electrode active material | Negative electrode active material D_{V}50/µm | First region length L/mm | Negative electrode material layer length L₀/mm | L/L₀ | | |
| Example 1-5 | 1 | / | Secondary particles | 4 | 7mm | 70mm | 10.00% | No delamination | 88.60 |
| Example 3-1 | 1 | 10 | Secondary particles | 4 | 7mm | 70mm | 10.00% | No delamination | 91.20 |
| Example 3-2 | 1 | 15 | Secondary particles | 4 | 7mm | 70mm | 10.00% | No delamination | 91.80 |
| Example 3-3 | 1 | 20 | Secondary particles | 4 | 7mm | 70mm | 10.00% | No delamination | 92.50 |
| Example 3-4 | 1 | 30 | Secondary particles | 4 | 7mm | 70mm | 10.00% | No delamination | 93.90 |
| Example 3-5 | 1 | 45 | Secondary particles | 4 | 7mm | 70mm | 10.00% | No delamination | 93.10 |
| Example 3-6 | 1 | 50 | Secondary particles | 4 | 7mm | 70mm | 10.00% | No delamination | 91.40 |
| Example 3-7 | 1 | 30 | Secondary particles | 8 | 7mm | 70mm | 10.00% | No delamination | 94.70 |
| Example 3-8 | 1 | 35 | Secondary particles | 8 | 7mm | 70mm | 10.00% | No delamination | 95.42 |

### Examples 4-1 to 4-3

Except that a plurality of positive electrode tabs and a plurality of negative electrode tabs were formed by die-cutting the positive electrode current collector and the negative electrode current collector during the battery manufacturing process, the rest was the same as example 1-5.

**Table 4**

| Group | Electrolyte | | Negative electrode material layer | | | | | Negative electrode tab structure and positive electrode tab structure | Low-temperature delamination degree | 5C rate cycling capacity retention rate/% |
|---|---|---|---|---|---|---|---|---|---|---|
| | 1,3-propanesultone content A% | Diethyl carbonate content/% | Artificial graphite particle morphology of negative electrode active material | Negative electrode active material D_{V}50/µm | First region length L/mm | Negative electrode material layer length L₀/mm | L/L₀ | | | |
| Example 1-5 | 1 | / | Secondary particles | 4 | 7mm | 70mm | 10.00% | Single negative electrode tab and single positive electrode tab welded to current collector | No delamination | 88.60 |
| Example 4-1 | 1 | / | Secondary particles | 4 | 7mm | 70mm | 10.00% | A plurality of negative electrode tabs and a plurality of positive electrode tabs integrally formed with current collector | No delamination | 91.30 |
| Example 4-2 | 1 | / | Secondary particles | 8 | 7mm | 70mm | 10.00% | A plurality of negative electrode tabs and a plurality of positive electrode tabs integrally formed with current collector | No delamination | 94.60 |
| Example 4-3 | 1 | 30% | Secondary particles | 8 | 7mm | 70mm | 10.00% | A plurality of negative electrode tabs and a plurality of positive electrode tabs integrally formed with current collector | No delamination | 96.80 |

From examples 1-1 to 1-7, comparative example 2, comparative example 5, comparative example 1, and comparative example 4 in Table 1, it can be seen that when the length of the first region accounts for 0.8% to 18% of the total length of the negative electrode material layer and the content of 1,3-propanesultone in the electrolyte is within the range of 0.01% to 8%, 1,3-propanesultone can form an SEI film with an appropriate thickness in the first region. In this case, solvent co-intercalation is not likely to occur in the secondary battery, so the problem that the negative electrode material layer of the secondary battery is easily peeled off from the negative electrode current collector at low temperature can be significantly reduced, and the rate cycling performance is basically not affected. If L/L₀ is excessively large or the content of 1,3-propanesultone is excessively small, the SEI film formed by 1,3-propanesultone cannot well prevent solvent co-intercalation in the secondary battery, and the negative electrode material layer is still easily peeled off from the surface of the negative electrode current collector, thereby also affecting the high-rate cycling performance (see the test results of comparative example 2 and comparative example 5); if L/L₀ is excessively small or the content of 1,3-propanesultone is excessively large, the formed SEI film is thick, which not only reduces solvent co-intercalation in the first region but also hinders the diffusion of lithium ions, thereby adversely affecting the high-rate cycling performance of the secondary battery (see the test results of comparative example 1 and comparative example 4). In addition, from examples 1-1 to 1-7 in Table 1, the preferred range of L/L₀ is 2% to 15%, and the further preferred range is 4% to 10%; from examples 1-8 to 1-10 in Table 1, the preferred range of L₀ is 80 to 260; and from examples 1-11 to 1-15 in Table 1, the preferred range of A is 0.1 to 5.

From example 1-5 and comparative example 3 in Table 1, it can be seen that the combination of primary particle artificial graphite and 1,3-propanesultone is relatively poor, which not only does not significantly mitigate the delamination phenomenon of the negative electrode material layer but also adversely affects the high-rate cycling performance.

In Table 2, the D_{V}50 of the negative electrode active material in example 1-5 and example 2-5 is not within the range of 5 µm to 15 µm, and the D_{V}50 of the negative electrode active material in examples 2-1 to 2-4 is within the range of 5 µm to 15 µm, so the high-rate cycling capacity retention rate of examples 2-1 to 2-4 is significantly better than that of example 1-5 and example 2-5. This indicates that when the volume-based median particle size D_{V}50 of the negative electrode active material is 5 µm to 15 µm, it can avoid a decrease in diffusion rate caused by excessively large particles and reduce side reactions (such as excessive growth of SEI film) caused by excessively large specific surface area of excessively small particles, which is beneficial to further improving the high-rate cycling performance and mitigating low-temperature delamination problem of the secondary battery.

In Table 3, the electrolyte in example 1-5 does not contain diethyl carbonate, so its high-rate cycling performance is worse than that of examples 3-1 to 3-8, which indicates that adding diethyl carbonate to the electrolyte can further improve the high-rate cycling performance of the secondary battery without causing delamination of the negative electrode material layer in the first region at low temperature.

In Table 4, the number of negative electrode tabs in example 1-5 is one, and its high-rate cycling performance is significantly worse than that of example 4-1, which indicates that providing a plurality of negative electrode tabs can provide more transport channels for ions and electrons, thereby further improving the charging performance of the secondary battery. Based on the results of Examples 4-2 to 4-3, as diethyl carbonate is added to the electrolyte and the particle size of artificial graphite is further optimized, the high-rate cycling performance of the secondary battery can be further improved.

The embodiments in this specification are all described in a related manner, and the same and similar parts between the embodiments may refer to each other, and each embodiment focuses on the differences from other embodiments.

The foregoing are only preferred embodiments of this application and are not intended to limit this application. Any modification, equivalent replacement, improvement, and the like made within the spirit and principles of this application shall be included within the protection scope of this application.

## Claims

1. A secondary battery, comprising an electrode assembly having a winding structure and an electrolyte; **characterized in that**, the electrode assembly comprises a positive electrode, a separator, and a negative electrode; the positive electrode comprises a positive electrode current collector and a positive electrode material layer disposed on at least one surface of the positive electrode current collector; the negative electrode comprises a negative electrode current collector and a negative electrode material layer disposed on at least one surface of the negative electrode current collector; the negative electrode material layer comprises a negative electrode active material, the negative electrode active material comprises artificial graphite, and the artificial graphite comprises secondary particles;
wherein the negative electrode material layer comprises a first region; the first region is a region in which the negative electrode material layer extends beyond the positive electrode material layer along a winding direction of the electrode assembly; a length of the first region along the winding direction of the electrode assembly is L mm, a length of the negative electrode material layer along the winding direction of the electrode assembly is L₀ mm, and 0.8% ≤ L/L₀ ≤ 18%; and
the electrolyte comprises 1,3-propanesultone; and based on a total mass of the electrolyte, a mass content of the 1,3-propanesultone is A%, wherein 0.01 ≤ A ≤ 8.

2. The secondary battery according to claim 1, **characterized in that**, 2% ≤ L/L₀ ≤ 15%.

3. The secondary battery according to claim 1, **characterized in that**, 4% ≤ L/L₀ ≤ 10%.

4. The secondary battery according to claim 1, **characterized in that**, 0.1 ≤ A ≤ 5.

5. The secondary battery according to claim 1, **characterized in that**, 80 ≤ L₀ ≤ 260.

6. The secondary battery according to claim 1, **characterized in that**, a median particle size D_{V}50 of the negative electrode active material is 5 µm to 15 µm.

7. The secondary battery according to claim 1, **characterized in that**, the electrolyte further comprises diethyl carbonate; and based on the total mass of the electrolyte, a mass content of the diethyl carbonate is 10% to 50%.

8. The secondary battery according to claim 7, **characterized in that**, based on the total mass of the electrolyte, the mass content of the diethyl carbonate is 15% to 45%.

9. The secondary battery according to claim 1, **characterized in that**, the negative electrode comprises a plurality of negative electrode tabs; and the plurality of negative electrode tabs are integrally formed with the negative electrode current collector.

10. The secondary battery according to claim 1, **characterized in that**, the positive electrode comprises a plurality of positive electrode tabs; and the plurality of positive electrode tabs are integrally formed with the positive electrode current collector.

11. An electronic apparatus, comprising the secondary battery according to any one of claims 1 to 10.
